# EUROPEAN PATENT APPLICATION

(11) **EP 4 538 772 A1**
(43) Date of publication of application: **16.04.2025**
(21) Application number: 23202882.9
(22) Date of filing: 11.10.2023
(51) Int. Cl.: G02B 27/01

(54) **AUGMENTED REALITY HEADSET**

(71) Applicant: Almer Technologies AG, 3011 Bern (CH)
(72) Inventor: BINDER, Timon, 3011 Bern (CH); SWINNEN, Tomas, 3960 Sierre (CH); PEREZ, Juan José, 4051 Basel (CH); SCHNELL, Pascal André, 4252 Bärschwil (CH); PUERTA DIAZ, Daniel, 8004 Zürich (CH); VRKOSLAV, Jan, 3700 Spiez (CH)
(74) Representative: Clerc, Natalia

(57) **Abstract**

An Augmented Reality headset comprises a beam-shaped frame (1) with an elongate shell (10) and with first electronic components arranged within the shell (10) and an optical unit (2) extending from the frame (1). The frame (1) comprises a skeleton (11) extending along the shell (10) and being arranged within the shell (10). The first electronic components are mounted on the skeleton (11), the first electronic components and the skeleton (11) forming together a skeleton unit which can be mounted as a whole in the shell (10). The inventive skeleton enables a preassembled skeleton unit. This facilitates the assembly and enhances the stability of the beam shaped frame.

## Description

### TECHNICAL FIELD

The present invention relates to an Augmented Reality headset, also called AR glasses, and a method for assembly such an AR headset.

### PRIOR ART

Augmented Reality glasses, also called AR headsets, AR glasses or Smart glasses, enable to overlay, in real time, virtual objects in real-world environments. They enrich an image of the real world with computer generated images and/or digital information. For example, AR glasses can be used for placing AR markers on machines, so that the person wearing the AR glasses knows which areas have to be analyzed or repaired. They may also comprise microphones. In addition to maintenance, other fields of application are for example manufacturing, education, retail, travel, real estate and sport.

Sometimes, the term "Assisted Reality" is used for devices that may not feature a see-through display or which even have see-through displays. Assisted Reality devices imply typically the addition of contextual information to the viewer's experience rather than true augmentation. However, in the context of this invention, they shall also be understood to be Augmented Reality headsets.

WO 2023/099675 A1 discloses an AR headset with a beam-shaped frame and an optical unit extending downwards from the frame, wherein the optical unit forms a unit mountable to the frame as a single component. This AR headset is robust, compact and affordable.

### SUMMARY OF THE INVENTION

It is an object of the invention to provide an improved AR headset.

This object is achieved with an AR headset having the features of either one of claims 1, 13 and 14 and a method according to claim 15.

The inventive Augmented Reality headset comprises a beam-shaped frame with an elongate shell and with first electronic components arranged within the shell and an optical unit extending from the frame. The frame comprises a skeleton extending along the shell and being arranged within the shell. The first electronic components are mounted on the skeleton, the first electronic components and the skeleton forming together a skeleton unit which can be mounted as a whole in the shell.

The skeleton supporting electronic components increases the stability of the headset. This is especially important when the headset is used in manufacturing or maintenance environments or in other non-protected environments. The risk that the headset is damaged is minimized. In addition, due to the increased stability, thinner components can be used for the cover and the shell, which reduces the weight and optimises the wearing comfort. Preferably, the thickness of the wall of the cover and the shell is about 1.5 mm, compared to more than 2 mm of conventional devices.

The skeleton supporting electronic components also improves the entire appearance of the headset and enhances the flexibility in the outer design. Since the inner part of the headset is mainly provided with one singe module, i.e., the skeleton unit, the outer shell can be designed in a modern look and it can be changed according to the market's demand, such as in shape, material and colour. In addition, since almost all components are arranged in the skeleton unit, a minimum number of screws or fixation means are needed to assemble the headset. The contour of the headset is therefore not disrupted by screws or other fixation means and connection joints are minimized or mainly invisible.

In addition, the skeleton supporting the electronic components facilitates assembly of the headset. The technically more demanding part of the assembly can be carried out by a well-trained person. The resulting assembled skeleton unit can be mounted to the shell and the other components of the AR headset can be added by a less trained or less experienced person. This ensures high quality of the end-product by minimizing the costs.

Preferably, the optical unit is preassembled forming a separate unit. In some embodiments, the optical unit is mounted on the shell independently of the skeleton. In more preferred embodiments, the optical unit is part of the skeleton unit. It is therefore mounted together with the other parts of the skeleton unit as a whole to the shell. In most preferred embodiments, the optical unit being part of the skeleton unit is mounted in a preassembled state to the skeleton.

Preferably, the optical unit extends from the skeleton. The skeleton can therefore easily be arranged within the shell and the optical unit can extend from the frame, especially it can extend downwardly from the beam-shaped frame when worn by a user.

The bottom side of the beam-shaped frame preferably ends above the eyes of the user, preferably it ends above the eyebrows of the user. The beam-shaped frame preferably rests on the forehead of the user. Preferably, a padding is attached to the rear side of the frame to increase the wearing comfort.

Preferably, the skeleton unit is demountable from the remaining frame, especially from the shell, as a whole. This allows easy repair and short interruption in use. In case a component in the skeleton unit is not working, the skeleton unit as a whole is removed and exchanged by a new working one. The non-functioning unit can be returned to the manufacturer for examination and service. In case another part of the AR headset is damaged, this part can easily be exchanged, and the expensive skeleton unit can still be used. This allows a long-term use of the AR headset and therefore minimizes the costs as well.

In some embodiments, the skeleton is smaller than the shell. In some embodiments, two or three skeletons are present which comprise first components and which are mountable one after the other to the shell. In more preferred embodiment, the skeleton has almost the same length or it has the same length as the shell. Preferably it has also almost the same width as the inner space of the shell. In most preferred embodiments, this is the single skeleton, or it is at the least the main skeleton in size and number of components mounted to it.

Preferably, the shell and the skeleton have a similar outer contour. Preferably, they have a curved shape. Preferably, the shell and the skeleton have a curved outer contour. The curvature corresponds preferably the average curvature of a human's forehead to enable a comfortable use.

In some embodiments, the skeleton is bendable lightly. Preferably, the skeleton is stiff or rigid. The skeleton is preferably designed such that it is as light as possible but adds as much support as possible. This ensures the structural integrity of the overall frame and ensures a minimum of weight.

Preferably, the shell is stiff. In some embodiments, the shell is slightly flexible to better insert the skeleton. However, the shell with the mounted cover are preferably stiff.

Preferably, a majority of the components of the AR headset are mounted to the skeleton and are therefore part of the skeleton unit. At least one second component is separately mounted to the frame. Preferably, this at least second component comprises the camera. In other embodiments, the camera is mounted to the skeleton as well. In other embodiments, more than one camera is present in the frame, wherein all or none or just a part of them is mounted to the skeleton. In some embodiments, only the at least one camera is not mounted to the skeleton. In preferred embodiments, the at least one camera is fixed to the shell, but it is hold within the skeleton.

Preferably, the first electronic components comprise at least some of the following components: a thermal foam, a controller, power backbone, signal backbone, heat conducting sheet, antenna, inertial measuring unit (IMU), loudspeaker, loudspeaker cable, microphone, microphone cable.

In some embodiments, at least one battery component is mounted to the skeleton or directly to the frame as well. In more preferred embodiments, the AR headset comprises at least one battery unit, preferably two battery units, connected to the frame. Most preferably, the at least one battery unit, preferably two battery units, is connected to the frame via a hinge. The battery unit can therefore be easily mounted and exchanged. By using a hinge, the battery units can be folded to the frame and the AR headset can be minimized in size for storing.

In some embodiments, a flexprint and/or a cable extends on the outside of the hinge from the frame to the battery unit. In more preferred embodiments, at least one cable and preferably all cables being present extend through the hinge from the frame to the battery unit. This arrangement protects the cables since they are not stretched or otherwise stressed by the movement of the hinge. The AR headset is therefore more robust, and lifetime is increased. Preferably, the hinge comprises a barrel and a pin extending through the barrel, wherein the pin comprises a through-opening and wherein the battery unit comprises a wire extending to the frame through the through-opening of the pin.

Preferably, the pin consists of two or more parts arranged one after the other in longitudinal direction of the pin. Preferably the pin is made of bronze, which reduces the friction and enables a smooth motion of the hinge.

The outer parts of the hinge are preferably made of plastic, most preferred of ABS + PC (acrylonitrile-butadiene-styrene + polycarbonate). Preferably, the shell, the skeleton and a housing of the battery unit are made of ABS + PC as well.

Preferably, the AR headset comprises at least one microphone and at least one loudspeaker. Preferably, the at least one loudspeaker is arranged within the battery unit. Preferably, two battery units are present, one of each side of the user's head and located near the ears of the user. In some embodiments, at least one battery unit is provided with a loudspeaker. Preferably, each of the two battery units are provided with a loudspeaker. Preferably a slit is present at the lower side of the battery unit to improve sound transfer to the ear of the user. In other embodiments, the at least one loudspeaker is located in another place of the AR headset or no loudspeaker is present at all.

Preferably, more than one microphone is present. Preferably, at least one microphone is arranged at the lower side, more preferably at the bottom side of the frame. This at least one microphone is used for catching the user's voice. Preferably, two, three or more microphones are arranged on the lower side. Three microphones on this side are mostly preferred. Preferably, at least one microphone is arranged on the upper side, preferably on the top side, of the frame. This at least one microphone is used to catch the environmental noise. Preferably, this environmental noise is filtered out in order to obtain a better understanding of the user's voice.

The AR headset is heating up during use, due to the electronic components in use. In order to protect the heat sensible components as well as the user's skin, means for heat management and especially for heat conduction are preferably present as well. In preferred embodiment, an elongate heat conducting unit is arranged along a front wall of the skeleton. It is either extending along the outside or the inside and most preferably it is extending, depending on the heat generating sources, on the inside and the outside of the front wall of the skeleton. The front wall or the front side is a wall or a side facing away from the user's head. The elongate heat conducting unit extends almost along the whole length of the front face of the skeleton. This ensures, that the heat is transferred away from the user's head and skin. Burning of the skin and uncomfortable wear because of the heat are prevented.

The heat management also enables to operate the electronic components at their maximum operating temperatures.

Preferably, a charging board, charging the at least one battery, is also thermally connected to the elongate heat conducting unit, especially to the graphite sheet. In some embodiments, the charging board is fixed to the skeleton. In other embodiments, the charging board is fixed to the in the shell or in the cover.

The heat management can be used in other types of AR headsets as well. It can for example be used in AR headset not having a skeleton or a skeleton unit, i.e., the electronic parts are arranged in small units or individually in the shell of the frame. The heat management system can also be used in an AR headset where the optical parts are arranged within the frame or where the optical parts are separate parts not forming an independent or a separate optical unit. The heat management is therefore claimed as a separate invention. Preferably, one single uninterrupted heat conducting sheet is applied to the AR headset, wherein the main heat generating source is preferably contacted directly. In other embodiments, the heat conducting sheet is not made of one single piece but consists of two or more sheets, wherein they preferably cover almost the whole front surface of the AR headset, except optical parts.

The AR headset in this separate invention therefore comprises a beam-shaped frame with an elongate shell and with first electronic components arranged within the shell and an optical unit extending from the frame. The frame comprises an elongate heat conducting unit arranged between the first electronic components and an inner face of a front side of the shell. The front side of the shell is facing away from a user's head. The elongate heat conducting unit extends almost along the whole length of the front side of the shell. The heat conducting unit preferably comprises at least one, preferably one single heat conducting sheet, which covers almost an entire front surface of the frame, except the optical parts. The conducting sheet is preferably made of graphite. In other embodiments, it is made of copper or aluminium. In some embodiment, instead of a sheet, thermal heat pipes are used.

This inventive AR headset can comprise the above-mentioned preferred features and the features of the dependent claims as well, with or without the optical unit and the skeleton unit.

The arrangement of the cables within the hinges can be used in other types of AR headsets as well. It can for example be used in AR headset not having a skeleton or a skeleton unit. It can also be used in AR headset where the optical parts are arranged within the frame or are separate parts not forming an independent or a separate optical unit. This arrangement is therefore claimed as a separate invention.

The AR headset in this separate invention comprises a beam-shaped frame with an elongate shell and with first electronic components arranged within the shell, an optical unit extending from the frame, and at least one battery unit connected to the frame via a hinge, the hinge comprising a barrel and a pin extending through the barrel. The pin comprises a through-opening. The battery unit comprises a wire extending to the frame through the through-opening of the pin. This AR headset can comprise the above-mentioned preferred features and the features of the dependent claims as well, with or without the optical unit and the skeleton unit.

The invention also refers to a method to assemble an Augmented Reality headset, preferably an Augmented Reality headset according to one of claims 1 to 14, the method comprising the steps of
- assembling optical components to form an optical unit,
- mounting electronic components to a skeleton and adding to optical unit to form a skeleton unit and
- fixing the skeleton unit to a shell to obtain a beam-shaped frame with the optical unit extending from the frame.

This method enables an easy assembly, maintenance and repair, enhances the robustness of the AR headset and provides flexibility in the outer design.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Figure 1: shows a first perspective view of an inventive AR headset;
- Figure 2: shows second perspective view of the AR headset according to figure 1;
- Figure 3: shows a side view of the AR headset according to figure 1;
- Figure 4: shows a perspective view of the AR headset according to figure 1 in a folded state without band;
- Figure 5: shows a top view of the AR headset according to figure 4 in an unfolded state;
- Figure 6: shows a bottom view of the AR headset according to figure 1;
- Figure 7: shows an exploded view of the AR headset according to figure 1;
- Figure 8: shows an exploded view of an optical unit of the AR headset according to figure 1;
- Figure 9: shows a cross-sectional view of the optical unit according to figure 8;
- Figure 10: shows an exploded view of a battery unit of the AR headset according to figure 1;
- Figure 11: shows a cross-sectional view of the battery unit according to figure 10;
- Figure 12: shows a top view of some parts of the battery unit according to figure 10,
- Figure 13: shows exploded view of some parts of the AR headset according to figure 1;
- Figure 14: shows another exploded view of some parts of the AR headset according to figure 1;
- Figure 15: shows another exploded view of some parts of the AR headset according to figure 1;
- Figure 16: shows a perspective view of a graphite sheet and an SBC of the AR headset according to figure 1 and
- Figure 17: shows perspective view of some parts the AR headset according to figure 1.

### DESCRIPTION OF PREFERRED EMBODIMENTS

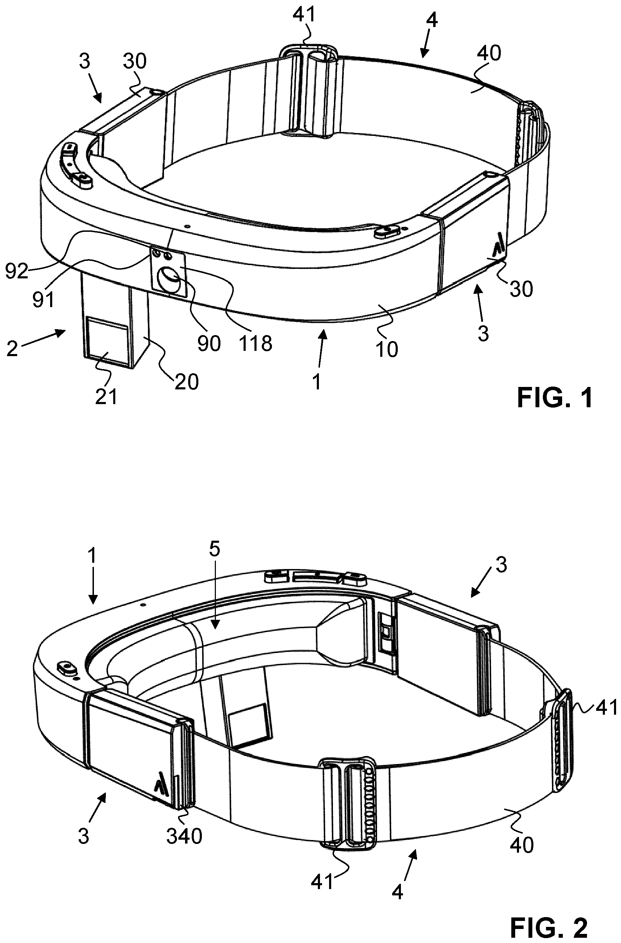

Figures 1 to 3 show an inventive AR headset which can be worn on a user's head. The AR headset comprises a beam-shaped, curved frame 1, an optical 2 extending downwards from the frame 1, a battery unit 3 arranged on each end side of the frame 1, a fixation part 4 and a padding 5 on the rear side of the frame 1.

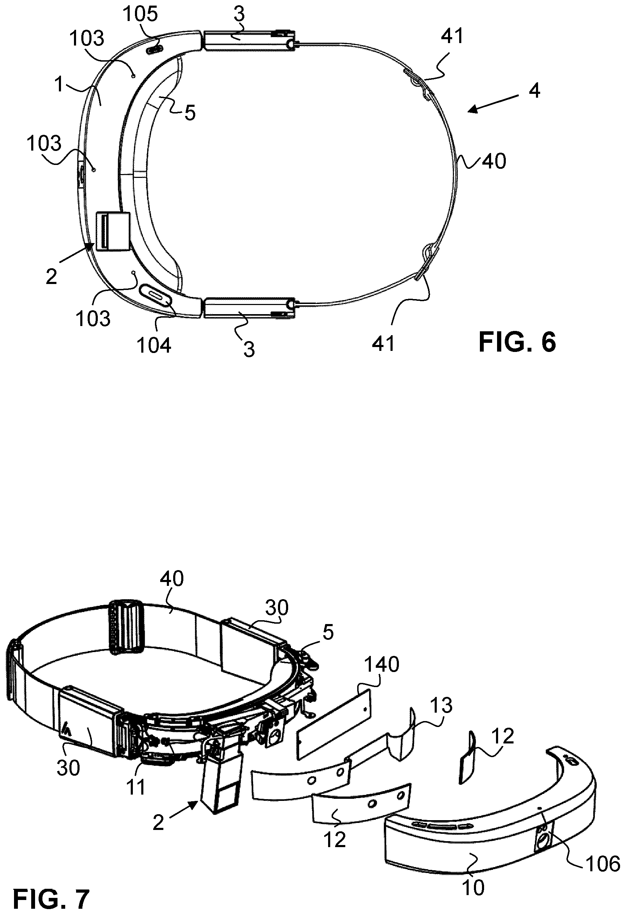

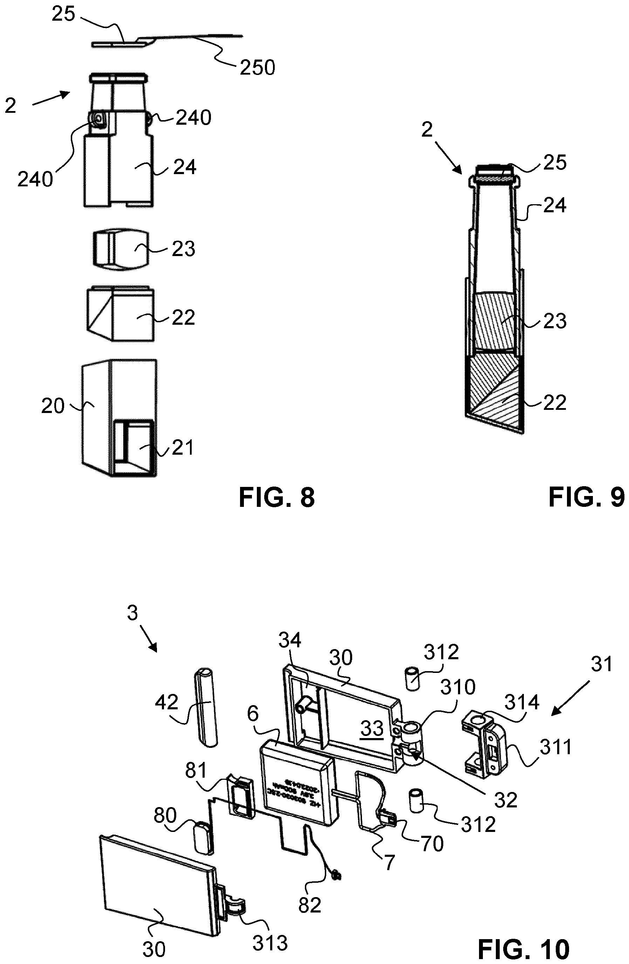

The padding 5 rests on a forehead of the not shown user's head. Preferably, it rests on top of the eyebrows of the user. The fixation part 4 can be two stiff temples having a free end each and resting on the user's ears. Preferably, the fixation part 4 comprises a band or a strap 40, which connects the two battery units 3 and which extends around the user's head. Preferably, the size of the strap 40, i.e., the length, can be adjusted with the help of at least one buckle 41, as can be seen in figures 1 to 3. The strap 40 has to free ends which are attached to a dogbone 42, i.e., a pin, each. Preferably, the dogbones 42 are overmoulded. The dogbones 42 are fixedly attached or removably attached to the battery units 3, more precisely to housings 30 of the battery units 3. This can be seen in figure 6 and the dogbone 42 is shown in figure 10 as well.

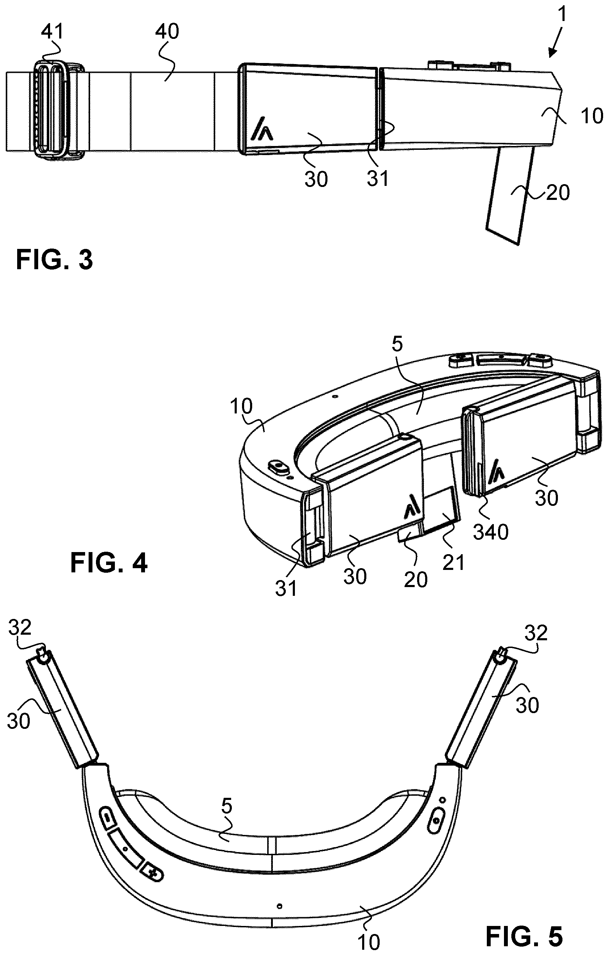

The battery units 3 are pivotably connected to the frame 1. Preferably, they can be folded towards the frame 1, as can be seen in figure 4. In figure 4, the fixation part 4 is not shown. When it is a strap 40 with or without buckles 41, the strap is arranged between the battery units 3 and the padding 5. In this state, the AR headset can be stored in a box having the appropriate shape to receive the folded AR headset.

The battery units 3 preferably follow the outer line of the beam-shaped frame 1, as shown in figures 1,2 and 6. However, in some embodiments, the angle between the battery units 3 and the free end parts of the frame 1 is more than zero degree. Figure 5 shows the battery units 3 in such a folded-out state. This oversize angle allows to wear the AR headset even on oversized heads. In figure 5 as well, the fixation part 4 is not shown.

Preferably, the battery units 3 can be folded in by about 90° and folded out by an overextension angle of about 25°.

The frame 1 comprises a shell 10 which forms the outer part visible in figures 1, 3 and 6. Inside the shell 1, a skeleton unit is arranged. The skeleton unit comprises a skeleton 11 and components mounted to the skeleton 11.

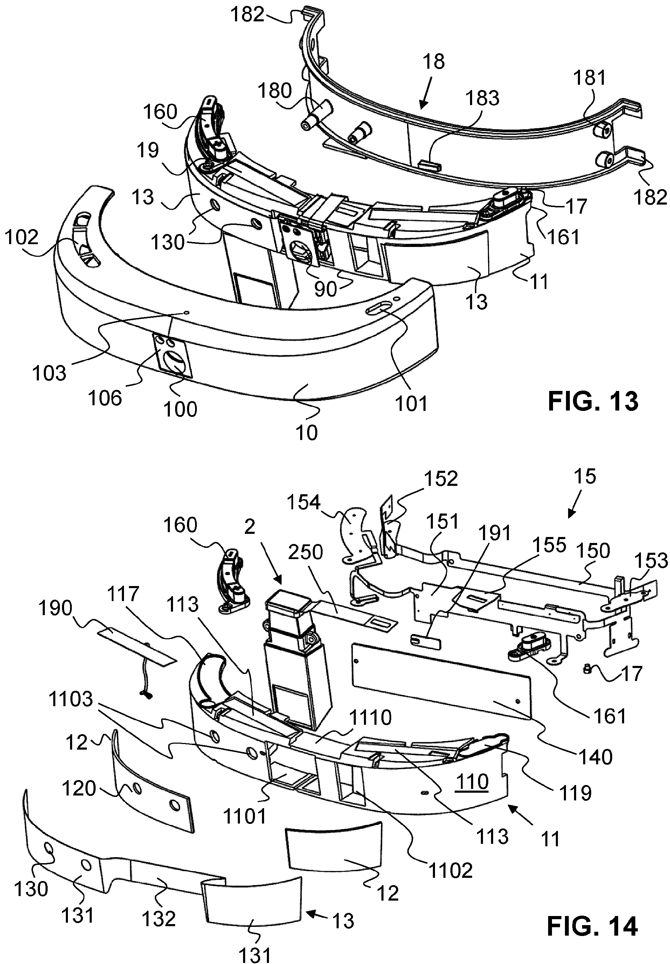

As can be seen in figure 7, the optical unit 2 is mounted to the skeleton 11 and extends downwards from the skeleton 11. A controller, here an SBC (Single Border Computer) 140, a heat transferring unit, here a graphite sheet 13, and a two-piece first thermal foam 12 are present as well. The arrangement of the SBC 140, the graphite sheet 13 and the first thermal foam will be described later in this text with reference to figures 13 to 17. The arrangement shown in figure 7 does not correspond to the one in the assembled state, since in the assembled state, the graphite sheet 13 is directly touching the shell 10 and the foam 12 is behind the graphite sheet 13 touching it to the shell 10.

The single parts of the AR headset, especially of the skeleton unit, and the assembly method will be described in the following:
The optical unit 2 is assembled separately. As can be seen in figures 8 and 9, the optical unit 8 comprises a casing 20 with a through-opening 21 extending from the front side to the back side of the casing 20.

The optical unit 2 further comprises a lens housing 24The lens housing 24 comprises first mounting orifices 240 which align with the first screw domes 180 of the cover 18, in order to fix the optical unit 2 and the skeleton 11 to the shell 10. The skeleton 11 comprises according mounting domes 114 (see figures 8, 10, 13, 15 and 17).

A lens 23, preferably a triplet lens, is entered into the space of the lens housing 24, preferably from the bottom side. It is preferably hold by form-fitting. A display is fixed preferably glued to the top side of the lens housing 24.

A beam splitter 22 is located in the casing 20 and the casing 20 is connected with the lens housing 24. Preferably, the beam splitter 22 is mounted to the bottom side of the lens housing 24 and the lens housing 24 is entered into the casing 20 and fixed to it by adhesive. The preassembled optical unit 2 is shown figure 9.

The beamsplitter and the lense triplet 23 are preferably made of COP (cyclo olefin polymer) or COC (cyclic olefin copolymer). Alternative materials for the beamsplitter 22 and the lense triplet 23 are for example glass or PMMA (polymethylmethacrylate).

The casing 20 is preferably made of a flexible rubber to protect the beamsplitter 22. The lens housing 24 is preferably made of ABS + PC.

Preferably, the optical unit 2 can be assembled separately from the other parts of the AR headset and can be then mounted and also removed as an individual module.

Figures 10 to 12 shown the components and the assembly of the battery unit 3.

The two battery units 3 are preferably identically shaped and comprise preferably the identical components. Each battery unit 3 comprises the housing 30, preferably a two-piece housing, and a hinge 31. The hinge 31 is arranged at a lateral end face of the housing 30. At the opposite end of the housing 30, the dogbone 42 of the strap 40 can be mounted. The interior of the housing 30 has two chambers, a battery chamber 33 and a loudspeaker chamber 34. The battery chamber 33 is preferably located at the hinge-side end, the loudspeaker chamber 34 at the dogbone-side.

The battery chamber 33 receives a battery 6 and the loudspeaker chamber 34 receives a loudspeaker holder 81 and a loudspeaker 80. Two or more, preferably five, battery cables 7 extend from the battery 6 and at least one loudspeaker cable 82 extends from the loudspeaker 80.

On the hinge-side end of a first part of the housing 30, two first barrels 310 are formed in one piece with the housing parts. Between the first barrels 310, a passageway 32 is formed, leading from the interior of the housing 30, especially from the battery chamber 33, in the space between the two first barrels 310. On the hinge-side end of the second part of the housing 30, a closing part 310 is formed which closes the gap between the two first barrels 310, so that the passageway 32 is closed to the outside and ends in the space between the two first barrels 310. The battery cable 7 as well as the loudspeaker cable 82 extend from the battery 6 and the loudspeaker 80, respectively, through the passageway 32 into the space between the two first barrels 310. This can be seen in figures 10 to 12.

The hinge 31 comprises a fixation part 311 for fixation of the battery unit 3 to the frame 1.

The fixation part 31 is preferably screwed to the shell 10 of the 1 or fitted on according domes of the shell 10.

The hinge 31 also comprises two second barrels 314, spaced apart from each other such, that the two first barrels 310 fit into the space between the two second barrels 314. The first and the second barrels 310, 314 are hollow and all four barrels define a common through-opening. Two hollow shafts 312 are introduced into the through-opening, one from each side. The length of the two shafts 312 are such, that the leave the passageway 32 open, i.e., they are together shorter than the length defined by the four barrels 310, 314. The two shafts 312 are preferably made of bronze. The housing 30 and the hinge 31 are preferably made of plastic, such as POM (Polyoxymethylene).

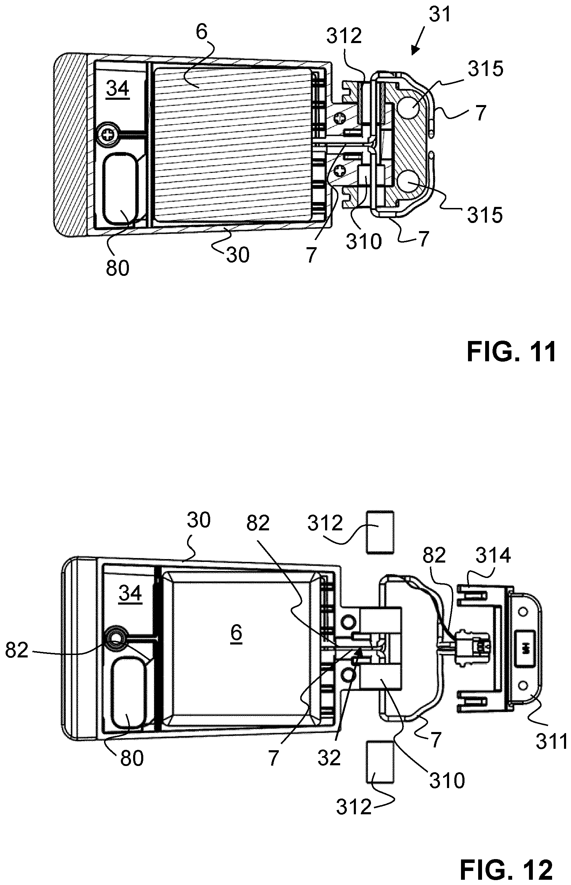

The battery cables 7 and the loudspeaker cables 82 extend through the two hollow shafts 312 and around the upper and lower surface of the fixation part 311. In figure 11, the way of the cables 7, 82 can be seen. In figure 12, the connector 70 can be seen as well. In the assembled state, the connector 70 is on the right-hand side of the hinge 11, not on the left hand side as shown in figure 12. This connector 70 holds the ends of the battery cables 7. Preferably, a separate connector is present which holds the loudspeaker cables 82. This separate connector is not shown in the figures. In other embodiments, one single connector 70 is used present for all cables. Each connector or the single connector 70 is plugged into a receptacle of the frame 1. In alternative embodiments, the connector 70 is otherwise connected with the electronic components located in the frame.

The two housing parts are attached to each other, for example by adhesive and/or by plugging them together or by ultrasonic welding. Other means of connection can be used as well. The hosing 30 is preferably closed so as to protect the components located inside. However, in a lower area of the housing, on the strap-side, a slot 340 is preferably present enabling the sound of the loudspeaker 80 to reach the user's ears. The slot 340 can be seen in figure 2.

Preferably, the hinge 31 is connected to the first part of the housing 30 by plugging the shafts 312 into the first and second barrels 310, 314. Then the battery 6 and the loudspeaker holder 81 as well as the loudspeaker 80 is mounted and the loudspeaker cable 82 and the battery cable 7 are laid through the passageway 32 and the shafts 312 to the outside of the fixation part 311. Finally, the second part of housing 30 is fixed to the first part of the housing 30.

Preferably, the battery unit 3 can be assembled separately from the other parts of the AR headset and can be then mounted and also removed as an individual module.

Almost all electronic components of the AR headset are preferably mounted to the skeleton 11. Preferably, the optical unit 2 is mounted to the skeleton 11 as well. This forms a skeleton unit as can be seen in figure 13. Figure 13 shows the shell 10, a cover 18 and between them as an individual part the skeleton unit 11. A camera 90 is mounted in the shell 10. In some embodiment, the skeleton unit 11 supports the camera 90.

The shell 10 has a u-shape longitudinal section. It is elongated and has a curved shape. On the front side, a round first through-opening is arranged preferably in a middle region along the length of the shell 10. On the top side, a second through-opening 101 is arranged in one end region of the shell 10 and a third through-opening 102 is in the other end region of the shell 10. On the bottom side of the shell 10, a square recess is present through which the square casing 20 of the optical unit 2 can extend downwards.

The cover 18 forms the back wall of the shell 10 and has therefore an appropriate shape and size. It has a curved shaped as well. The cover 18 comprises first screw domes 180, which extend through the skeleton 11 to not-shown receptacles the shell 10. The cover 18 also comprises second screw domes 181 extending spaced from the skeleton 11 to not shown receptacles of the shell 10. Not-shown screws can be introduced through these domes 180, 181 from the rear side of the cover 18, so as to fix the cover 18 to the shell 10, thereby fixing the skeleton 11 to the shell 10 as well. Arms 182 and noses 183 may help to place the cover 18 correctly onto the shell 10 and to snap into appropriate receivers of the shell 10. This can be seen in figure 13. Screws extending through the arms 182 of the cover 18 and fixation holes 315 of the hinge 31 of the battery unit 3 are used to fix the battery unit 3 at the same time.

The rear side of the cover 18, i.e., the side facing the user's forehead, preferably has a flat, but curved surface. The padding 5 is mounted onto this surface, preferably by a Velcro glued to the cover's rear surface. The padding 5 can be fixed by other means as well, for example by adhesive. However, preferably, it is removably mounted so that it can be changed quite often for hygienic reasons.

The assembly of the skeleton unit will be described in the following with regard to figures 13 and 14 to 17.

The main parts can be seen in figure 14. The skeleton 11 has a similar shape as the shell 10. It is also elongated and curved with the same radius of curvature. It is preferably made of ABS + PC.

The skeleton unit also comprises the skeleton 11 and the heat transferring unit, such as the thermal foam 12 and the graphite sheet 13 already mentioned above. In addition, the skeleton unit comprises first electronic components, such as the controller, here an SBC 140, a one-piece or two-piece backbone 15, one or more antennas 190, an IMU module 191 (IMU = inertial measurement unit) and the already mentioned optical unit 2. Preferably, it also comprises an LED deflector 17. It may comprise more components, such as charging pins 104, like POGO pins, for charging the AR headset, an USB-C connector 105 and microphones 103, microphone membranes. A charging board, charging the at least one battery may also be located where the charging pins 104 are shown. The last-mentioned components can be seen in figure 6. They are not shown in figure 14. Reference number 160 shows function buttons and reference number 161 shows a power button. They are usually not part of the skeleton unit despite of being shown in figure 14. The charging board is not shown in the figures.

The skeleton 11 comprises a front wall 110, a bottom wall 111 and a top wall 113. The front is facing away from the user's head, and it is facing towards an inner surface of the shell 10. The front part of the skeleton 11 has a similar outer shape as the shell 10 and it is preferably plane. In a middle region of the front wall 110, a first window 1101 is present and next to it, a second window 1102 is present. Two through-holes 1103 are passing through the front wall 110. This can be seen in figure 14.

During assembly, a two-part first thermal foam 12 is attached to the front face of the front wall 110. The first thermal foam 12 is preferably two sheets. Preferably, the first thermal foam 12 comprises an adhesive to be fixed to the surface. A first part of the first thermal foam 12 comprises two through-holes matching the through-holes of the front wall 110. This first part is arranged next to the first window 1101 and preferably covers at least half of or almost the entire front face on the right side of the skeleton 11, seen from the user's direction. The adhesive second part of the first thermal foam 12 is attached next to the second window 1102 and preferably covers at least half of the left side of the front face. The thermal foam 12 is preferably made of EVA (ethylene-vinyl acetate). The thermal foams 12 and 141 ensure contact of the graphite sheet 13 with the heat source and/or the heat storing means. The foam preferably ensures the pressure to the cover, such that the heat can be transferred to the outside of the frame 1.

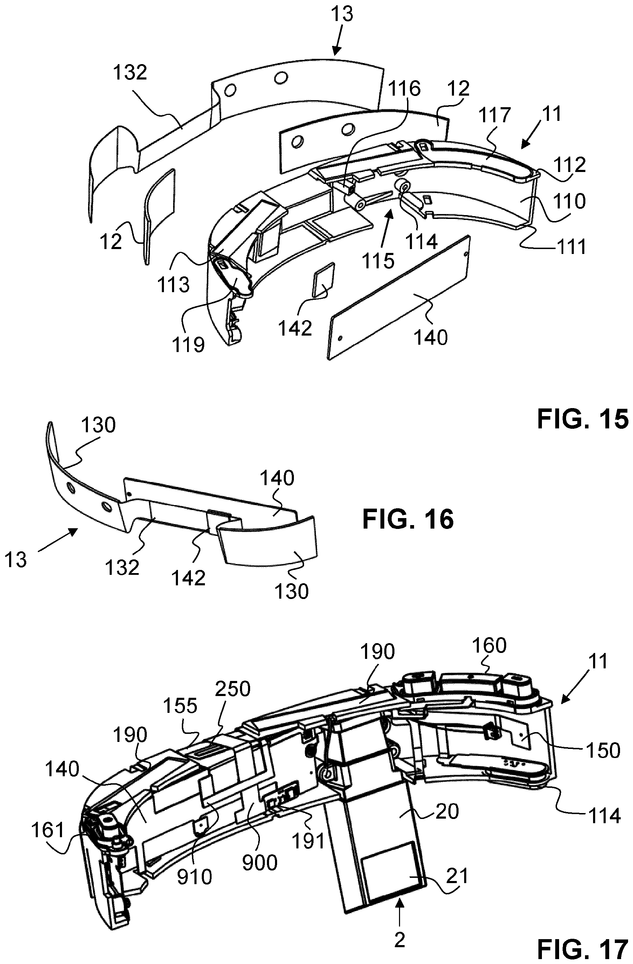

The bottom 111 of the skeleton 11 comprises a recess 115, best seen in figure 15. As can be seen in figure 17, after assembly, the optical unit 2 extends downwardly through this recess 115.

The top wall 112 of the skeleton 11 comprises first indentations 113 where the antennas 190 are connected to the backbone 15, a second indentation 119 where the power button 161 is connected to the backbone 15 and a third indentation 117 for connecting the function buttons 160 with the backbone 15. A recess 1110 is present in the middle part of the top wall 110 as well.

The skeleton 11 may comprise additional windows, recesses and indentation which enable connection of additional second electronic component with the first electronic components being part of the skeleton unit. This further reduces the weight of the device while keeping the structural integrity.

For assembly the skeleton unit, the backbone 15 is first combined with the SBC 140 and the graphite sheet 13. Preferably, the backbone 15 comprises two pieces, a power backbone 150 and a signal backbone 151. The power backbone 150 has a first area 152 for connecting the charging pins 104. The signal backbone 151 comprises a second area 153 and a third area 154 which have the shape of the second and third indentation 119, 117 of the skeleton 11. The signal backbone 151 further comprises a flap 155 which suits into the recess 1110 in the top wall of the skeleton 11.

The power backbone 150 and the signal backbone 151 are connected to the SBC 140 as well as the antennas 190 and the IMU module 191, speaker cables extensions and other cables which may be needed for first and second electronic components.

Then the graphite sheet 13 is attached to the SBC 140. The graphite sheet 13 comprises two side parts 131 and a middle part 132 in-between. On a first of these side parts 131 through-holes 130 are present, matching the through-holes 120 of the first thermal foam 12 and the through-holes 1103 of the skeleton 11.

Since a microprocessor arranged on the SBC 140 generates most of the heat, the graphite sheet 13 is pressed onto the microprocessor or on the opposite side of the SBC plate 140. The opposite side of the sheet 13, facing away from the microprocessor, is provided with a second thermal foam 142. This can be seen in figures 15 and 16. The second thermal foam 142 is arranged in the region of the microprocessor, which is not shown in the figures, but which is arranged on the SBC plate 140. In the assembled state, the middle part 132 of the graphite sheet 13 is between the second thermal foam 142 and the SBC 140, and not shown as in figure 15.

The preassembled backbone 15, SBC 140, antennas 190 and the other first electronic components including cables mentioned above can then be put into to the skeleton 11. The second and third areas 153, 154 of the signal backbone 151 and the antennas 190 are bent over to the top of the skeleton 11 and placed into the first, second and third indentations 113, 117, 119. Positioning means, such as holes and/or pins, located on the backbone 15 and the skeleton 11 help to adjust the position of the skeleton 11 and the preassembled components.

When placing the preassembled components into the skeleton 11, the side parts 130 of the graphite sheet 13 are guided through the first and second window 1101, 1102 of the skeleton 11 to the front face of the skeleton 11. The side parts 130 are preferably glued to the first thermal foam 12 or otherwise attached to the skeleton 11.

In addition, the preassembled components are fixed to the skeleton by screws. The screws are preferably entered from the rear side. Two screws are sufficient to fix the components and to form the skeleton unit. A screw dome is marked in figure 15 with the reference number 116.

The heat conducting sheet 13, preferably made of graphite, allows to have one single, uninterrupted means for transferring heat on the inside and the outside of the skeleton 11. On the inside, the main heat produced, i.e., the heat generated by the microprocessor, is directly guided into the section of the heat conducting sheet 13 located inside the skeleton 11. The heat produced by other parts may first heat the skeleton 11 and may then be guided from the skeleton 11 to the section of the heat conducting sheet 13 arranged on the outside of the skeleton 11. The size of the heat conducting sheet 13 in length and height, which both are similar to the size of the skeleton 11, ensure a well spread heat transport. Thermal foams 12, 142 are arranged such that they ensure optimized contact of the heat conducting sheet 13 with the heated parts, i.e., the microprocessor on the SBC 140 and the front wall 110 of the skeleton 11. The principle of conducting heat to the front side of the AR headset along almost the whole length of the front side of the AR headset is claimed as a separate invention. Most preferably, one single, uninterrupted heat conducting sheet is applied to an AR headset, wherein the main heat generating source is preferably contacted directly. In some embodiments, an additional thermal heat paste or another highly thermal conductive material is used as well.

The optical unit 2 is then mounted to the skeleton 11. The signal line 250 of the display 25 it arranged in the recess 1110 on the top wall 111 of the skeleton 11 and the flap 155 of the signal backbone 151 is bend over the signal line 250 and also place into this recess 1110.

In addition, membranes of microphones and other components can previously or afterwards be added to the skeleton 11 as well to form the skeleton unit. These components can also be second electronic components which are mounted to the shell10.

The camera 90 is preferably mounted to the shell 10 before the skeleton unit is entered into the first opening 100 of the shell 11, contrary to the arrangement shown in figure 13. The camera 90 is preferably hold in a transparent camera holder 106 shown in figure 13. The camera 90 comprises a lens, a camera flexprint 900, an ALS 91 (ALS = ambient light sensor) an ALS flexprint 910 and a flashlight and/or a privacy 92.

When the skeleton unit is arranged within the shell 10, the camera 90 is received in the first window 1101 of the skeleton 11. The camera flexprint 900 and the ALS flexprint 910 are arranged over to top wall 110 of the skeleton 11 to the rear side of the SBC 140. This can be seen in figure 17. In some embodiments, the camera 90 and the camera flexprint 900 are already present in the shell 10 when the skeleton 11 is mounted. In some embodiments, the camera 90 is mounted onto the skeleton 11 and will be entered into the shell 10 together with the skeleton 1.

The now assembled skeleton unit with the bent-over camera flexprint 900 and ALS flexprint 910 can be seen in in figure 17. The function buttons 160 and the power button 161 are usually not part of the skeleton unit, but they are mounted to the shell 10 and then contacted with the second and third areas 153, 154 of the signal backbone 151, despite the arrangement in figures 13 and 17.

The assembled skeleton unit can now be entered into the shell 10 and fixed to the shell 10 by using the cover 18, as shown in figure 13. As mentioned before, screws can be used to fix the first and second screw domes 180, 182 in not shown receptacles of the shell 10.

The preassembled battery units 3 and the strap 4 can be added as well. The padding 5 can be attached to the rear side of the cover 18.

The assembled final AR headset is shown in figures 1 to 3.

The inventive skeleton enables a preassembled skeleton unit. This facilitates the assembly and enhances the stability of the beam shaped frame. The inventive heat transferring unit protects the user's skin from overheating and burns, enhances the wearing comfort as well and enables to operate the electronic components at their maximum operating temperatures.

**LIST OF REFERENCE SIGNS**

| | | | |
|---|---|---|---|
| 1 | frame | 151 | signal backbone |
| 10 | shell | 152 | first area |
| 100 | first through-opening | 153 | second area |
| 101 | second through-opening | 154 | third area |
| 102 | third through-opening | 155 | flap |
| 103 | microphone | 160 | function buttons |
| 104 | Charging pins (fast charging POGO pins) | 161 | power button |
| | | 17 | LED deflector |
| 105 | USB-C connector | 18 | cover |
| 106 | transparent cover | 180 | first screw dome |
| 11 | skeleton | 181 | second screw dome |
| 110 | front wall | 182 | arm |
| 1101 | first window | 183 | nose |
| 1102 | second window | 190 | antenna |
| 111 | bottom wall | 191 | IMU module (IMU = inertial measurement unit) |
| 1110 | recess | | |
| 112 | top wall | | |
| 113 | first indentation (for antenna) | 2 | optical unit |
| 114 | mounting domes | 20 | casing |
| 115 | recess | 21 | through-opening |
| 116 | second screw dome | 22 | beam splitter |
| 117 | third indentation | 23 | lens |
| 119 | second indentation | 24 | lens housing |
| 12 | first thermal foam | 240 | first mounting orifice |
| 120 | through holes | 25 | display |
| 13 | graphite sheet | | |
| 130 | through holes | 3 | battery unit |
| 131 | side part | 30 | housing |
| 132 | middle part | 31 | hinge |
| 140 | SBC (Session Border Controller) | 310 | first barrel |
| | | 311 | fixation part |
| 142 | second thermal foam | 312 | shaft (bronze, pin, bush) |
| 15 | backbone | 313 | closing part |
| 150 | power backbone | 314 | second barrel |
| 315 | fixation hole | | |
| 32 | passageway | 7 | battery cable |
| 33 | battery chamber | 70 | connector |
| 34 | loudspeaker chamber | | |
| 340 | slot | 80 | loudspeaker |
| | | 81 | loudspeaker holder |
| 4 | fixation part | 82 | loudspeaker cable |
| 40 | strap | | |
| 41 | buckle | 90 | camera |
| 42 | dogbone | 900 | camera flexprint |
| | | 91 | ALS (ambient light sensor) |
| 5 | padding | 910 | ALS flexprint |
| | | 92 | flash light / privacy light |
| 6 | battery | | |

## Claims

1. Augmented Reality headset comprising
- a beam-shaped frame (1) with an elongate shell (10) and with first electronic components arranged within the shell (10) and
- an optical unit (2) extending from the frame (1),
**characterized**
**in that** the frame (1) comprises a skeleton (11) extending along the shell (10) and being arranged within the shell (10) and
**in that** the first electronic components are mounted on the skeleton (11), the first electronic components and the skeleton (11) forming together a skeleton unit which can be mounted as a whole in the shell (10).

2. Augmented Reality headset according to claim 1 wherein the optical unit (2) is part of the skeleton unit.

3. Augmented Reality headset according to any one of claims 1 or 2 wherein the optical unit (2) extends from the skeleton (11).

4. Augmented Reality headset according to any one of claims 1 to 3 wherein the skeleton unit is demountable from the remaining frame, especially from the shell (10), as a whole.

5. Augmented Reality headset according to any one of claims 1 to 4 wherein the skeleton (11) has almost the same length or it has the same length as the shell (10).

6. Augmented Reality headset according to any one of claims 1 to 5 wherein the shell (10) and the skeleton (11) have a similar outer contour.

7. Augmented Reality headset according to any one of claims 1 to 6 wherein the shell (10) and the skeleton (11) have a curved outer contour.

8. Augmented Reality headset according to any one of claims 1 to 7 wherein the beam-shaped frame (1) comprises at least one second electronic components which is separately mounted to the frame (1), wherein the at least one second electronic component preferably comprises at least a camera (90).

9. Augmented Reality headset according to any one of claims 1 to 8 wherein the first electronic components comprise at least some of the following components: a thermal foam (12, 142), a controller (140), power backbone (150), signal backbone (151), heat conducting sheet (13), antenna (190), inertial measuring unit (IMU) (191), loudspeaker (80), loudspeaker cable (82), microphone (103), microphone cable.

10. Augmented Reality headset according to any one of claims 1 to 9 wherein the Augmented Reality headset comprises at least one battery unit (3), preferably two battery units (3), connected to the frame (1) via a hinge (31).

11. Augmented Reality headset according to claim 10 wherein the hinge (31) comprises a barrel (310) and a pin (42) extending through the barrel (310), wherein the pin (42) comprises a through-opening and wherein the battery unit (3) comprises a wire (7, 82) extending to a frame (1) side through the through-opening of the pin (42).

12. Augmented Reality headset according to any one of claims 1 to 11 wherein an elongate heat conducting unit is arranged along a front wall (110) of the skeleton (11), wherein the front wall (110) of the skeleton (11) faces away from a user's head, wherein the elongate heat conducting unit extends almost along the whole length of the front wall (110) of the skeleton (11).

13. Augmented Reality headset, preferably according to one of claims 1 to 12, the Augmented Reality headset comprising
- a beam-shaped frame (1) with an elongate shell (10) and with first electronic components arranged within the shell (19) and
- an optical unit (2) extending from the frame (1),
**characterized**
**in that** the frame (1) comprises an elongate heat conducting unit arranged between the first electronic components and an inner face of a front side of the shell (10), wherein the front side of the shell (10) is facing away from a user's head, and
**in that** the elongate heat conducting unit extends almost along the whole length of the front side of the shell (10).

14. Augmented Reality headset, preferably according to one of claims 1 to 12, the Augmented Reality headset comprising
- a beam-shaped frame (1) with an elongate shell (10) and with first electronic components arranged within the shell (10),
- an optical unit (2) extending from the frame (1), and
- at least one battery unit (3) connected to the frame (1) via a hinge (31), the hinge (31) comprising a barrel (310) and a pin (42) extending through the barrel (310),
**characterized**
**in that** the pin (42) comprises a through-opening and
**in that** the battery unit (3) comprises a wire (7, 82) extending to the frame (1) through the through-opening of the pin (42).

15. Method to assemble an Augmented Reality headset, preferably an Augmented Reality headset according to one of claims 1 to 14, the method comprising the steps of
- assembling optical components to form an optical unit (2),
- mounting electronic components to a skeleton (11) and adding to optical unit (2) to form a skeleton unit and
- fixing the skeleton unit to a shell (10) to obtain a beam-shaped frame (1) with the optical unit (2) extending from the frame (1).
